Europäisches Patentamt

(19) European Patent Office

Office européen des brevets

(11) Numéro de publication: **0 259 569**
**B1**

(12) ## FASCICULE DE BREVET EUROPEEN

(45) Date de publication du fascicule du brevet:
**03.01.90**

(51) Int. Cl.⁴: **G01B 3/20**

(21) Numéro de dépôt: **87110073.1**

(22) Date de dépôt: **13.07.87**

(54) **Instrument de mesure.**

(30) Priorité: **08.09.86 CH 3598/86**

(43) Date de publication de la demande:
**16.03.88 Bulletin 88/11**

(45) Mention de la délivrance du brevet:
**03.01.90 Bulletin 90/1**

(84) Etats contractants désignés:
**DE FR GB SE**

(56) Documents cités:
**CH-A- 624 871**
**GB-A- 2 023 838**
**GB-A- 2 176 037**

(73) Titulaire: **TESA S.A., Rue Bugnon 38,
CH-1020 Renens(CH)**

(72) Inventeur: **Martin, Charles, Route de Yens,
CH-1143 Apples(CH)**
Inventeur: **Stauber, Philippe, Chemin du Salève 15,
CH-1004 Lausanne(CH)**
Inventeur: **Tischler, Karl, Avenue de Cour 155,
CH-1007 Lausanne(CH)**

(74) Mandataire: **Misrachi, Alfred, 15, Ch. de la Plantaz,
CH-1024 Ecublens(CH)**

ACTORUM AG

## Description

La présente invention a pour objet un instrument de mesure pour mesurer et/ou contrôler la précision d'au moins une cote d'une pièces usinée, comprenant au moins une touche mobile, un transducteur électronique influencé par le déplacement de cette touche et apte à produire un signal électrique représentatif de ce déplacement, un circuit électronique de traitement relié au transducteur et propre à élaborer un signal numérique de mesure de ce déplacement, et un tableau signalétique comprenant un affichage de la grandeur numérique correspondante de ce signal.

Les appareils connus de ce genre, tel que le pied à coulisse décrit dans le brevet suisse No 623 411, procurent l'avantage de faciliter la lecture de la cote mesurée, en évitant l'équivoque de l'interprétation d'une indication par échelles, cette cote étant affichée en valeurs numériques sur le tableau signalétique.

La lecture directe de la cote en valeurs numériques facilite sa comparaison avec les valeurs limites de tolérances prescrites, lors du contrôle des pièces usinées. Cette comparaison est encore facilitée lorsque, comme sur l'appareil décrit dans ce brevet suisse, l'initialisation de la mesure peut être déplacée à volonté et située de ce fait à la valeur nominale de la cote à contrôler.

Dans ce même domaine du contrôle des pièces usinées mais dans le but différent de visualier la tendance d'une machine-outils, il a été conçu un dispositif décrit dans le brevet suisse No 624 871 dans lequal un palpeur électronique de mesure est relié à un tableau signalétique présentant l'affichage des variations dans le temps d'une même cote mesurée sur un nombre déterminé de pièces prises sur une série en cours de fabrication, par réfé rence aux limites de tolérances de cette cote. Sur ce tableau sont réparties en abcisses et en ordonnées une pluralité de diodes luminescentes à éclairement individuel commandé couvrant une zone comprise entre deux droites parallèles luminescentes figurant en ordonnées les deux limites des tolérances, les positions des rangées de diodes en abcisses étant significatives de l'ordre des mesures effectuées dans le temps. Les diodes du tableau sont reliées à un circuit électronique de commande d'éclairement sélectif comprenant une unité de traitement et de classification des signaux électriques de mesure en provenance du palpeur électronique de mesure.

Avec ce dispositif de contrôle, l'opérateur a toujours sous les yeux la position de la cote mesurée dans l'intervalle des tolérances de sa cote nominale, sans être astreint à la nécessité de pratiquer à chaque prise de mesure une comparaison de valeurs numériques.

Selon cette mème tendance de faciliter toujours davantage le travail de l'opérateur, on connaît une jauge d'intérieurs destinée tout spécialement au contrôle du diamètre de cavités, tels que des alésages, trous borgnes, filetages et gorges intérieures. Sur cette jauge le tableau signalétique comporte, en plus de l'affichage en valeurs numériques de la cote intérieure mesurée, un affichage de trois symboles géométriques à éclairement commandé individuellement, différenciés par leurs couleurs et significatifs de la position de la cote mesurée par rapport à l'intervalle de ses tolérances. Ces trois symboles sont significatifs respectivement de la qualité "bonne", "à rejeter", et "à corriger" par enlèvement de la matière de la pièce contrôlée.

Le circuit électronique de traitement des signaux fournis par le transducteur de mesure de cette jauge d'intérieurs est approprié à mémoriser les valeurs des tolérances enregistrées, à classer la cote mesurée par rapport à l'intervalle de ces valeurs, et à commander l'éclairement du symbole correspondant, c'est-à-dire l'éclairement du symbole "bonne" lorsque la cote mesurée est classée dans l'intervalle des tolérances, du symbole "à rejeter" lorsque la cote mesurée est de grandeur supérieure à la limite supérieure des tolérances, ou du symbole "à corriger" par enlèvement de matière lorsque la cote mesurée est de grandeur inférieure à la limite inférieure des tolérances.

Avec cette jauge d'intérieurs, et une fois mises en mémoire les limited de tolérances de la cote à mesurer, l'opérateur n'a plus qu'à observer le symbole éclairé à chaque prise de mesure pour savoir si la pièce contrôlée est bonne, à mettre au rebut ou à conserver pour une reprise ultérieure par enlèvement de matière.

L'invention a pour but, de faciliter encore davantage le travail d'un opérateur chargé du contrôle de pièces usinées avec un instrument de mesure à affichage numérique du genre décrit un début d'exposé, et plus particulièrement lors du contrôle de pièces présentant chacune aussi bien des cotes extérieures qu'intérieures à contrôler.

A cet effet, l'instrument de mesure selon l'invention est caractérisé en ce qu'il comporte en combinaison:

a) - une mémoire reliée au circuit de traitement pour enregistrer et mémoriser temporairement les valeurs des tolérances d'une cote nominale d'un élément d'une pièce à contrôler,

b) - une unité de classification reliée au circuit de traitement et à la mémoire pour classer la cote effective mesurée par référence à l'intervalle des valeurs des tolérances mémorisées,

c) - un affichage sur le tableau signalétique de cinq symboles géométriques à éclairement commandé individuellement et différenciés par leurs formes et/ou leurs couleurs, dont trois sont significatifs respectivement de la qualité "bonne", "à rejeter", et "à corriger" par enlèvement de matière de la pièce contrôlée, et dont les deux autres sont significatifs respectivement de l'état "intérieur" et "extérieur" de la cote mesurée,

d) - un dispositif de commande manuelle pour commander l'enregistrement par la mèmoire des valeurs limites des tolérances, et pour afficher l'état "intérieur" ou "extérieur" de la cote à mesurer et éclairer le symbole correspondant,

e) - et un processeur relié au circuit de traitement, à la mémoire, à l'unité de classification et aux affichages du tableau signalétique ainsi qu'au dispositif de commande manuelle, et programmé soit pour commander automatiquement l'éclairement du symbole significatif de la qualité "bonne" lorsque la cote mesurée est comprise dans l'intervalle des tolérances mémorisées, - soit pour commander automatiquement l'éclairement du symbole "à rejeter" dans le cas d'une cote préalablement affichée "intérieure" ou au contraire du symbole "à corriger" dans le cas d'une cote préalablement affichée "extérieure" lorsque la cote mesurée est de grandeur supérieure à la limite supérieure des tolérances mémorisées, -soit pour commander automatiquement l'éclairement du symbole "à corriger" dans le cas d'une cote préalablement affichée "intérieure" ou au contraire du symbole "à rejeter" dans le cas d'une cote préalablement affichée "extérieure" lorsque la cote mesurée est de grandeur inférieure à la limite inférieure des tolérances mémorisées.

De la sorte, lorsque l'une ou l'autre des différentes cotes extérieures ou intérieures mesurées d'une pièce à contrôler est hors tolérances, l'opérateur est libéré de toute nécessité de réflexion pour décider le plus rapidement possible et sans risques d'erreur si la pièce contrôlée doit être irrémédiablement rejetée ou bien au contraire conservée pour être ultérieurement corrigée par enlèvement de matière. En l'absence de cet affichage automatique différencié obtenu par l'invention, il y aurait en effet la nécessité d'une réflexion soutenue, généralement dans l'inconfort de l'environnement bruyant d'un atelier de fabrication et dans le stress d'un rendement obligé, qui doit tenir compte non seulement de la position inférieure ou supérieure de la cote mesurée par rapport à l'intervalle de ses tolérances, mais également et en même temps de l'état "intérieur" ou "extérieur" de la cote mesurée, comme pour les cotes du diamètre d'un alésage ou de celui d'un arbre.

Le dessin annexé représente, à titre d'exemple, une forme d'exécution de l'objet de l'invention ainsi qu'une variante d'un détail de cette forme d'exécution.

La figure 1 est une vue d'ensemble en élévation d'un pied à coulisse selon l'invention.

La figure 2 est un schéma fonctionnel du circuit électronique de mesure et d'affichage de l'instrument selon figure 1.

Les figures 3 et 4 illustrent schématiquement les effets caractéristiques dudit instrument.

Les figures 5 et 6 illustrent la variante.

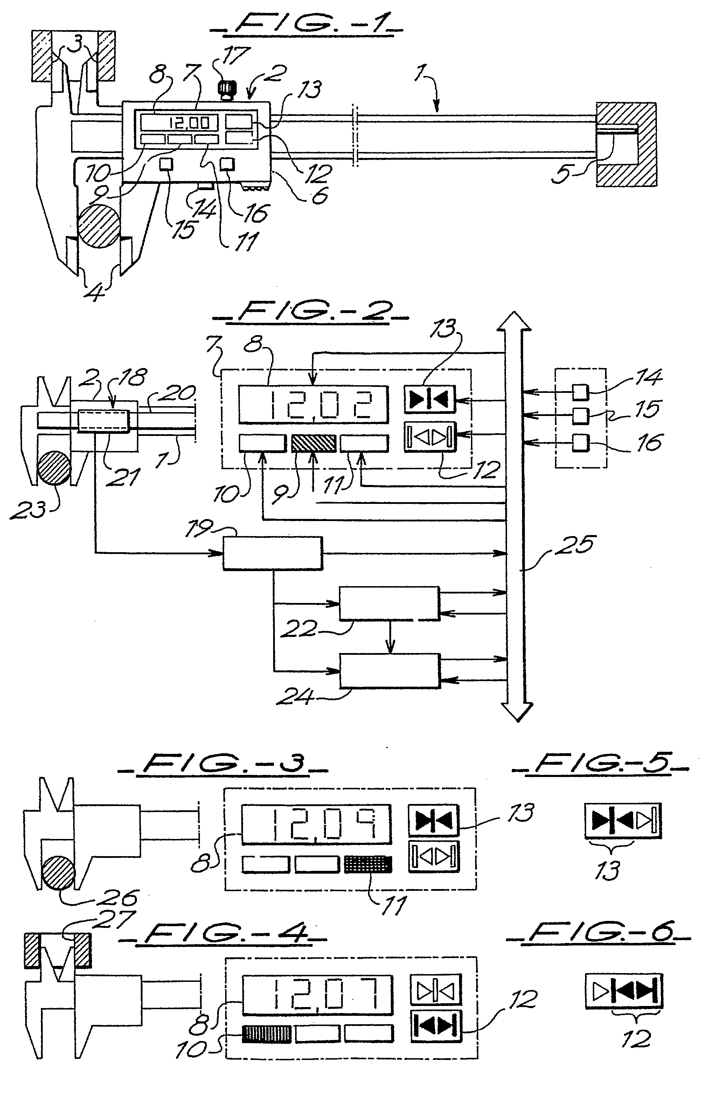

Le pied à coulisse représenté figure 1 dans son ensemble est composé d'une perche rectiligne 1 et d'un coulisseau 2 monté mobile par translation le long de le perche 1, ces deux éléments portant des touches 3 pour mesures intérieures et des touches 4 pour mesures extérieures. Une jauge 5 pour mesures de profondeurs, visible par son extrémité, est reliée au coulisseau 2.

Ce pied à coulisse est équipé d'un système électronique de mesure enfermé dans un boîtier 6 solidaire du coulisseau 2 et présentant un tableau signalétique 7 à affichage numérique 8 et à cinq symboles géométriques 9, 10, 11, 12 et 13, un dispositif de commande du type presse-boutons à trois boutons 14, 15 et 16 et une vis 17 de blocage temporaire du coulisseau 2 sur la perche 1.

Le système électronique de mesure, représenté schématiquement figure 2, compend un transducteur 18 influencé par le déplacement du coulisseau 2 le long de la perche 1 et apte à produire un signal électrique représentatif de ce déplacement, et un circuit 19 de traitement de ce signal, relié au transducteur 18 et propre à élaborer un signal numérique de mesure de ce déplacement présenté par l'affichage numérique 8 du tableau signalétique 7. Ce système électronique de mesure peut être du genre de celui décrit dans le brevet suisse No 648 929 dans lequel le transducteur 18 est constitué par des électrodes réparties sur une échelle 20 solidaire de la perche 1 et sur un curseur 21 solidaire du coulisseau 2, ces électrodes étant arrangées pour former deux paires de capacités de mesure de déplacement du curseur 21 le long de l'échelle 20. Dans ce système de mesure selon le brevet suisse précité le circuit de traitement 19 comporte des capacités de référence commutées de type MOS montées en pont avec les capacités de mesure du transducteur 18. Mais tout autre système électronique de mesure apte à produire un signal numérique de mesure du déplacement du coulisseau 2 le long de la perche 1 peut évidemment être appliqué ici, tel que par exemple un système optique- électronique.

Le pied à coulisse est équipé d'une combinaison de moyens représentés figure 2 comprenant :

- Une mémoire 22 reliée au circuit de traitement 19 pour enregistrer et mémoriser temporairement les valeurs limites des tolérances d'une cote nominale d'un élément d'une pièce à contrôler, qui est représentée ici par le diamètre d'un arbre 23.

- Une unité de classification 24 reliée au circuit de traitement 19 et à la mémoire 22 pour classer la valeur de la cote effective mesurée, délivrée par le circuit de traitement 19, par référence à l'intervalle des valeurs des tolérances mémorisées par la mémoire 22.

- Un affichage sur le tableau signalétique, de préférence du type LCD, de cinq symboles géométriques 9, 10, 11, 12 et 13 à éclairement commandé individuellement, et différenciés par leurs formes et/ou leurs couleurs. Trois de ces symboles repérés 9, 10 et 11 sont ici de même forme rectangulaire mais de couleurs différentes. Le symbole 9 est de couleur verte; il est significatif de la qualité "bonne" de la pièce contrôlée, à savoir que la cote effective mesurée est de valeur comprise dans l'intervalle des tolérances mémorisées. Les symboles 10 et 11 sont respectivement de couleurs rouge et jaune, indiquent tous deux que la cote mesurée est hors tolérances et sont significatifs respectivement, le rouge 10 que la pièce contrôlée est "à rejeter" et le jaune 11 que la pièce contrôlée est susceptible d'être "à corriger" par enlèvement de matière. Les deux autres symboles 12 et 13 sont significatifs respectivement de l'état "intérieur" et "extérieur" de la cote mesurée et se présentent ici tous deux sous la forme de triangles noirs, soit à deux sommets divergents compris entre deux traits noirs pour le symbole 12 "intérieur", soit à deux sommets convergents entourant un trait noir pour le symbole 13 "extérieur".

- Un dispositif de commande manuelle, déjà signalé, comprenant ici un bouton 15 pour commande l'enregistrement par la mémoire 22 des valeurs limites des tolérances, et un bouton 16 pour afficher l'état "intérieur" ou "extérieur" de la cote à mesurer et éclairer le symbole correspondant 12 ou 13 du tableau signalétique 7. A noter ici la présence dans ce dispositif d'un troisième bouton 14 destiné à la mise en marche et à l'arrêt du fonctionnement du système de mesure et à l'initialisation de la mesure, d'utilisation habituelle.

- Un processeur 25, relié au circuit de traitement 19, à la mémoire 22, à l'unité de classification 24 et aux affichages 8 à 13 du tableau signalétique 7 ainsi qu'aux boutons poussoirs 14, 15 et 16 du dispositif de commande manuelle.

Ce processeur 25 est programmé selon l'enseignement déjà donné précédemment, tout au moins pour ce qui est des effets spéciaux propres à l'invention, ces effets étant mis en relief par trois exemples de prises de mesure illustrées par les figures 3 et 4 ainsi que par la partie correspondante de la figure 2.

Pour bien fixer les idées, on considère dans ce qui suit que les trois boutons poussoirs 14, 15 et 16 sont à commandes cycliques.

- La première pression sur le bouton 14 permet tout à la fois de mettre en fonction l'appareil et d'initialiser la mesure par affichage du zéro (0,00) à la position où se trouve le coulisseau 2 sur la perche 1; une pression courte permet d'initialiser la mesure par affichage du zéro (0,00) à une nouvelle position du coulisseau; une pression longue sur le même bouton permet d'arrêter le fonctionnement de l'appareil, avec extinction de tous les affichages.

- Le bouton 15 permet de mettre en mémoire, à la première pression, une première valeur limite de tolérance correspondant à la cote de positionnement du coulisseau 2, avant cette première pression, par rapport au zéro d'initialisation de la mesure; il permet de mettre en mémoire, à la seconde pression et de la même manière, la seconde valeur limite de tolérance, en allumant simultanément l'un des deux symboles 12 ou 13, par exemple le symbole 13 "extérieur" pour constituer quittance visible de l'enregistrement des deux valeurs limites des tolérances qui vient d'être effectué; enfin, à la troisième pression, il efface la mémorisation des valeurs limites des tolérances et éteint le symbole 12 ou 13 allumé.

- Le bouton 16 permet à chaque pression de changer l'affichage lumineux "extérieur" 13 ou "intérieur" 12 avant une prise de mesure, selon qu'il s'agit d'une cote intérieure ou extérieure à mesurer.

Les trois exemples donnés de prises de mesure se rapportent à deux arbres 23 (fig.2) et 26 (fig.3), et à un alésage 27 (fig.4) de diamètres de même cote nominale de 12,00 mm, et de mêmes tolérances de ± 0,05 c'est-à-dire comprises dans l'intervalle de 11,95 mm mini. à 12,05 mm maxi.

La mise en fonctionnement est considérée effectuée ici pour ces trois exemples avec les touches fermées face à face, c'est-à-dire pour initialisation de la mesure au zéro absolu.

Pour la première prise de mesure selon figure 2 du diamètre de l'arbre 23, et une fois mémorisées les limites des tolérances précitées à l'aide du bouton 15 et affiché le symbole 13 "extérieur" (s'il ne l'est déjà) à l'aide du bouton 16, l'opérateur n'a plus qu'à observer le symbole allumé automatiquement par le processeur 25 pour connaître la qualité de la pièce contrôlée. En l'occurence, la cote 12,02 étant comprise dans l'intervalle des limites des tolérances mémorisées, le symbole éclairé est le 9, de couleur verte, significatif de la qualité "bonne" de cette pièce.

Pour la seconde prise de mesure selon figure 3 du diamètre de l'autre arbre 26, dont la cote effective est de 12,09 mm, l'opérateur n'a rien d'autre à faire que l'observer le symbole allumé automatiquement par le processeur, sans changer l'affichage 13, puisqu'il s'agit là encore d'une cote extérieure. En l'occurence, la cote de 12,09 étant de grandeur supérieure à celle de la limite supérieure de 12,05 mm des tolérances mémorisées, le symbole éclairé est le 11, de couleur jaune, significatif de la qualité "à corriger" de la pièce contrôlée, puisque cet arbre 26 peut être repris à l'usinage pour enlèvement de matière pour rendre la pièce "bonne".

Pour la troisième prise de mesure selon figure 4 du diamètre de l'alésage 27, dont la cote effective est de 12,07 mm, l'opérateur doit préalablement changer l'affichage 13 et le remplacer par l'éclairement du symbole 12 significatif d'une cote intérieure, par une pression sur le bouton 16, et observer simplement le symbole éclairé automatiquement par le processeur. En l'occurrence, la cote de 12,07 dépassant la limite supérieure de 12,05 mm des tolérances enregistrées, comme dans l'exemple précédent selon figure 3, le symbole éclairé est au contraire le 10, de couleur rouge, significatif de la qualité "à rejeter", cet alésage ne pouvant être corrigé par enlèvement de matière, puisqu'il en manque.

Ces prises de mesure auraient évidemment pu se faire avec une initialisation de la mesure pour une ouverture des touches à la cote nominale de 12,00, par exemple sur un étalon, auquel cas les affichages numériques 8 auraient été respectivement de + 0,02 à la figure 2, de + 0,09 sur la figure 3 et de + 0,07 sur la figure 4; pour adapter les affichages automatiques correspondants 9, 11 et 10, les valeurs mémorisées des limited de toléranes doivent dans ce cas être de ± 0,05 au lieu de 11,95 et 12,05.

Le nombre de boutons du dispositif de commande n'est pas limitatif; il peut être inférieur ou supérieur à trois selon l'éntendue de cycle fonctionnel dévolu à chacun d'eux. Ces boutons poussoirs peuvent également être remplacés par d'autres moyens, tels que par exemple des boutons rotatifs à index de référence.

Les formes et les couleurs des cinq symboles données en exemple ne sont pas non plus limitatives.

Il est possible également, selon l'exemple de la variante selon les figures 5 et 6, d'imbriquer l'un dans l'autre deux symboles, tels que les deux symboles 12 et 13.

Ces variantes et d'autres encore peuvent également être apportées sans sortie du cadre de l'invention, telles que par exemple des adjonctions d'affichages en mesures anglaises correspondantes, de signalisations d'erreurs, de quittances d'opérations effectuées, de même que des sorties destinées au raccordement du système électronique de mesure à une imprimante ou à un ordinateur.

Enfin, il convient de relever que le pied à coulisse décrit n'est nullement la seule possibilité de réalisation de l'invention qui sera tout aussi avantageusement applicable à tous types de mesureurs d'intérieurs et d'extérieurs comportant une ou plusieurs touches mobiles.

## Revendications

1. Instrument de mesure pour mesurer et/ou contrôler la précision d'au moins une cote d'une pièce usinée, comprenant au moins une touche mobile, un transducteur électronique influencé par le déplacement de cette touche et apte à produire un signal électrique représentatif de ce déplacement, un circuit électronique de traitement relié au transducteur et propre à élaborer un signal numérique de mesure de ce déplacement, et un tableau signalétique comprenant un affichage (8) de la grandeur numérique correspondante de ce signal, caractérisé en ce qu'il comporte en outre en combinaison :

a) - une mémoire (22) reliée au circuit de traitement (19) pour enregistrer et mémoriser temporairement les valeurs limites des tolérances d'une cote nominale d'un élément d'une pièce à contrôler,

b) - une unité de classification (24) reliée au circuit de traitement (19) et à la mémoire (22) pour classer la cote effective mesurée par référence à l'intervalle des valeurs des tolérances mémorisées,

c) - un affichage sur le tableau signalétique (7) de cinq symboles géométriques à éclairement commandé individuellement et différenciés par leurs formes et/ou leurs couleurs, dont trois (9, 10, 11) sont significatifs respectivement de la qualité "bonne", "à rejeter" et "à corriger" par enlèvement de matière de la pièce contrôlée, et dont les deux autres (12, 13) sont significatifs respectivement de l'état "intérieur" et "extérieur" de la cote mesurée,

d) - un dispositif de commande manuelle (15, 16) pour commander l'enregistrement par la mémoire des valeurs limites des tolérances, et pour afficher l'état "inté rieur" ou "extérieur" de la cote à mesurer et éclairer le symbole correspondant,

e) - et un processeur (25) relié au circuit de traitement (19), à la mémoire (22), à l'unité de classification (24) et aux affichages (8, 9, 10, 11, 12, 13) du tableau signalétique ainsi qu'au dispositif de commande manuelle (15, 16), et programmé soit pour commander automatiquement l'éclairement du symbole (9) significatif de la qualité "bonne" lorsque la cote mesurée est comprise dans l'intervalle des tolérances mémorisées, - soit pour commander automatiquement l'éclairement du symbole "à rejeter" (10) dans le cas d'une cote préalablement affichée "intérieure" (12) ou au contraire du symbole "à corriger" (11) dans le cas d'une cote préalablement affichée "extérieure" (13) lorsque la cote mesurée est de grandeur supérieure à la limite supérieure des tolérances mémorisées, - soit pour commander automatiquement l'éclairement du symbole "à corriger" (11) dans le cas d'une cote préalablement affichée "intérieure" (12) ou au contraire "à rejeter" (10) dans le cas d'une cote préalablement affichée "extérieure" (13) lorsque la cote mesurée est de grandeur inférieure à la limite inférieure des tolérances mémorisées.

## Claims

1. A measuring instrument to measure and/or check the precision of at least one dimension of a machined part, comprising at least one movable contact, an electronic transducer influenced by the displacement of this contact and adapted to produce an electric signal which is representative of this displacement, an electronic processing circuit connected to the transducer and adapted to prepare a numerical measurement signal of this displacement and a descriptive panel comprising a display of the corresponding numerical quantity of this signal, characterised in that it further comprises, in combination:

a) a store (22) connected to the processing circuit (19) to record and temporarily store the limiting values of the tolerances of a nominal dimension of an element of a part to be checked,

b) a classification unit (24) connected to the processing circuit (19) and to the store (22) to classify the effective dimension measured by reference to the range of the values of the stored tolerances,

c) a display on the descriptive panel (7) of five geometrical symbols with individually controlled illumination and differentiated by their shapes and/or their colours, three (9, 10, 11) of them being significant respectively of the quality "good", "to be rejected" and "to be corrected" by removal of material from the checked part and the other two (12, 13) of them being significant respectively of the state "internal" and "external" of the measured dimension,

d) a manual control device (15, 16) to control the recording by the store of the limiting values of the tolerances and to display the state "internal" or "external" of the dimension to be measured and to illuminate the corresponding symbol,

e) a processor (25) connected to the processing circuit (19), to the store (22), to the classification unit (24) and to the displays (8, 9, 10, 11, 12, 13) of the descriptive panel as well as to the manual control device (15, 16) and programmed either to control automatically the illumination of the symbol (9) signifying the quality "good" when the dimension measured is comprised within the range of the stored tolerances, — or to control automatically the illumination of the symbol "to be rejected" (10) in the case of a dimension previously indicated as "internal" (12) or, on the contrary, of the symbol "to be corrected" (11) in the case of a dimension previously indicated as "external" (13) when the dimension measured is larger in size than the upper limit of the stored tolerances, – or to control automatically the illumination of the symbol "to be corrected" (11) in the case of a dimension previously indicated as "internal" (12) or, on the contrary "to be rejected" (10) in the case of a dimension previously indicated as "external" (13) when the dimension measured is smaller in size than the lower limit of the stored tolerances.

## Patentansprüche

Meßinstrument zum Nessen und/oder Kontrollieren der Präzision von mindestens einem Maß eines bearbeiteten Werkstücks, mit mindestens einer beweglichen Meßspitze, einem durch die Verschiebung dieser Meßspitze beeinflußten elektronischen Meßwertumsetzer zur Erzeugung eines für diese Verschiebung repräsentativen elektrischen Signals, einem elektronischen Verarbeitungskreis; der an den Meßwertumsetzer angeschlossen und zum Erarbeiten eines numerischen Meßsignals für diese Verschiebung geeignet ist, und einer Anzeigetafel, die eine Sichtanzeige (8) für die diesem Signal entsprechende numerische Größe aufweist, dadurch gekennzeichnet, daß es außerdem in Kombination enthält:

a) einen mit dem Verarbeitungskreis (19) verbundenen Speicher (22) zum Registrieren und temporären Speichern der Grenzwerte der Toleranzen eines Sollmaßes von einem Element eines zu kontrollierenden Werkstücks,

b) eine mit dem Verarbeitungskreis (19) und dem Speicher (22) verbundene Klassifikationseinheit (24) zum Klassifizieren des gemessenen Effektivmaßes in Beziehung zum Intervall der gespeicherten Toleranzwerte,

c) eine Sichtanzeige auf der Anzeigetafel (7) mit fünf geometrischen Leuchtsymbolen, die individuell gesteuert und unterschiedlich in ihren Formen und/oder Farben sind, von denen drei (9, 10, 11) signifikant sind für die Qualität "gut", "Ausschuß" beziehungsweise "nachzubessern" durch Abarbeiten von Material von dem kontrollierten Werkstück, und von denen die beiden anderen (12, 13) signifikant sind für die Lage des gemessenen Wertes "innerhalb" oder "außerhalb",

d) eine Vorrichtung für manuelle Betätigung (15, 16) zur Steuerung der Registrierung der Grenzwerte der Toleranzen durch den Speicher und zum Anzeigen der Lage des zu messenden Wertes "innerhalb" oder "Außerhalb" und zum Beleuchten des entsprechenden Symbols,

e) und einen mit dem Verarbeitungskreis (19), dem Speicher (22), der Klassifikationseinheit (24) und den Sichtanzeigen (8, 9, 10, 11, 12, 13) der Anzeigetafel sowie mit der Vorrichtung für manuelle Betätigung (15, 16) verbundenen Prozessor (25), der programmiert ist, sei es, um die Beleuchtung des für die Qualität "gut" signifikanten Symbols (9) automatisch zu betätigen, wenn das gemessene Maß innerhalb des Intervalls der gespeicherten Toleranzen liegt, – oder um die Beleuchtung des Symbols "Ausschuß" (10) automatisch zu betätigen im Falle eines vorher "innerhalb" (12) angezeigten Maßes oder, im Gegenteil, des Symbols "nachzubessern" (11) im Falle eines vorher "außerhalb" (13) angezeigten Maßes, wenn das gemessene Maß eine Größe oberhalb der Obergrenze der gespeicherten Toleranzen hat, – oder um die Beleuchtung des Symbols "nachzubessern" (11) automatisch zu betätigen im Falle eines vorher "innerhalb" (12) angezeigten Maßes oder, im Gegenteil, "Ausschuß" (10) im Falle eines vorher "außerhalb" (13) angezeigten Maßes, wenn das gemessene Maß eine Größe kleiner als die Untergrenze der gespeicherten Toleranzen hat.

EP 0 259 569 B1

_FIG.-1_

_FIG.-2_

_FIG.-3_

_FIG.-4_

_FIG.-5_

_FIG.-6_